# FASCICULE DE BREVET EUROPEEN

(11) **EP 1 835 411 B1**
(45) Date de publication et mention de la délivrance du brevet: **10.04.2013**
(21) Numéro de dépôt: 07103576.0
(22) Date de dépôt: 06.03.2007
(51) Int. Cl.: G06F 13/36

(54) **Systeme sur puce a controle semi-distribue**
Einchipsystem mit halbverteilter Kontrolle
System on chip with semi-distributed control

(30) Priorité: 16.03.2006 FR 0650892
(43) Date de publication de la demande: 19.09.2007
(73) Titulaire: Commissariat à l'Énergie Atomique et aux Énergies Alternatives, 75015 Paris (FR)
(72) Inventeur: Lemaire, Romain, 38170, Seyssinet-Pariset (FR); Lattard, Didier, 38680, Rencurel (FR); Clermidy, Fabien, 38120, Saint-Egreve (FR); Bernard, Christian, 38960, Saint Etienne de Crossey (FR)
(74) Mandataire: Augarde, Eric

(56) Documents cités:
- F. CLERMIDY, D. VARREAU, D. LATTARD: "A NoC-based communication framework for seamless IP integration in complex systems" IP/SOC 2005, 7 décembre 2005 (2005-12-07), page 08/12/2005, XP002410625 Grenoble, France
- CHAN J SELIGSON NORTEL NETWORKS D DURHAM INTEL S GAI K MCCLOGHRIE CISCO S HERZOG IPHIGHWAY F REICHMEYER PFN R YAVATKAR INTEL A SMI: "COPS Usage for Policy Provisioning (COPS-PR)" IETF STANDARD, INTERNET ENGINEERING TASK FORCE, IETF, CH, mars 2001 (2001-03), XP015008867 ISSN: 0000-0003
- RADULESCU A ET AL: "COMMUNICATION SERVICES FOR NETWORKS ON CHIP" PROCEEDINGS OF THE INTERNATIONAL WORKSHOP ON SYSTEMS, ARCHITECTURES, MODELING AND SIMULATION. SAMOS, XX, XX, vol. 2, 2002, pages 275-299, XP001206391

## Description

### DOMAINE TECHNIQUE

La présente invention concerne le domaine des systèmes sur puce ou SoC (*System on Chip*) mettant en oeuvre un réseau sur puce ou NoC (*Network on Chip*), en particulier pour une implémentation de type software radio d'un modem en bande de base.

### ÉTAT DE LA TECHNIQUE ANTÉRIEURE

Il est connu de l'état de la technique d'utiliser un système sur puce (SoC) pour traiter des applications de type « flot de données ». Dans une telle application, différentes unités de traitement réalisées sur un même substrat et interconnectées entre elles par un réseau sur puce (NoC), effectuent divers traitements sur les données. Le flot de données passe d'une unité de traitement à une autre, en se divisant éventuellement en plusieurs flots qui peuvent fusionner à nouveau ultérieurement. Au terme d'un traitement au sein d'une unité, typiquement un calcul, ou un formatage, les données traitées sont transmises à une autre unité ou une pluralité d'autres unités via le réseau pour subir d'autres traitements. Les données sont transmises d'une unité à l'autre sous forme de paquets, chaque paquet comprenant un en-tête de routage permettant le cheminement du paquet à travers le réseau jusqu'à l'unité de destination et une charge utile comportant les données proprement dites. La commutation de paquets se fait par exemple selon un mécanisme dit de « wormhole routing » connu en soi.

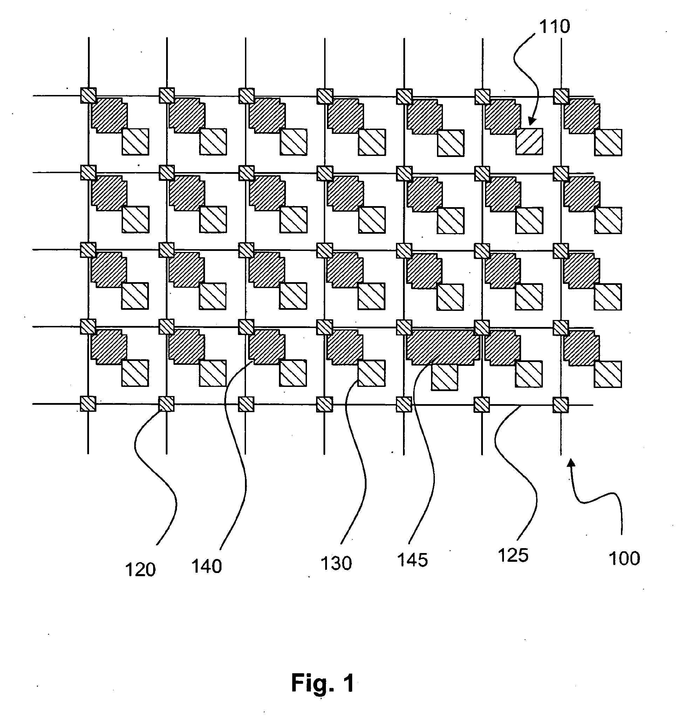

La Fig. 1 représente de manière schématique un exemple de système sur puce pour application de type « flot de données », tel que connu de l'état de la technique.

Le système sur puce 100 comprend d'une part un réseau sur puce et d'autre part des unités de traitement 130 interfacées avec le réseau au moyen d'interfaces réseau 140. Le réseau sur puce, ici de maillage régulier bidimensionnel, est constitué de routeurs 120 situés en des noeuds d'interconnexion reliés entre eux au moyen de liaisons physiques 125. En général, la topologie et la dimension du réseau peuvent être quelconques.

Les interfaces réseau constituent une partie essentielle du système sur puce : elles permettent de faire abstraction des communications au niveau des unités de traitement. Le rôle d'une interface réseau est de gérer localement les communications entrantes et sortantes de l'unité de traitement de sorte que, vu de cette dernière, tout se passe comme si les connexions avec les autres unités de traitement étaient de type point à point. Les interfaces réseau permettent de faire communiquer les unités de traitement en dépit de leur disparité. En outre, les interfaces réseau peuvent être reliées à un ou plusieurs noeuds du réseau. On a illustré en 145 une interface reliée à deux noeuds adjacents.

Les unités de traitement peuvent être dédiées à une tâche ou bien être génériques (CPU, RAM, etc.). Celles qui sont dédiées ont souvent une architecture propriétaire et des interfaces d'entrée/sortie spécifiques. En outre, les unités de traitement sont généralement configurables pour leur permettre de fonctionner selon différents modes opératoires.

L'exécution d'une application par un système sur puce requiert la coopération des différentes unités de traitement. Cette coopération est généralement organisée et synchronisée par un contrôleur central, 110. Ce contrôleur suit l'évolution du flot de données à travers le réseau. Il envoie des ordres de réception de données, de traitement puis d'émission de données aux différentes unités de traitement via leurs interfaces réseau associées. A chaque étape de traitement, les unités rendent compte au contrôleur central de leurs activités respectives, par exemple par un mécanisme d'interruption. Celui-ci prend alors les décisions sur les actions suivantes à réaliser par la ou les unités de traitement.

Ce type de fonctionnement en mode centralisé est simple à mettre en oeuvre mais peu performant en terme de latence. En effet, le contrôleur central est sans cesse interrompu et le flot de données s'écoule par à-coups. De surcroît, il ne permet pas aisément un changement d'échelle (*scalability*) lorsque le nombre d'unités de traitement croît.

D'autres types de fonctionnement présentant un mode plus distribué sont connus de l'état de la technique. Il a été notamment proposé dans l'article de F.Clermidy et al. intitulé « A NoC based communication framework for seamless integration in complex systems », IP-SOC 2005 ainsi que dans la demande de brevet non publiée FR0452182, déposée au nom de la présente demanderesse, un contrôle semi-distribué selon lequel un contrôleur central est en charge du contrôle grossier de l'application et les interfaces réseau de son contrôle fin au niveau local.

Plus précisément, le contrôleur central fournit à chaque couple d'interface réseau et unité de traitement associée une configuration ou une séquence de configurations à adopter pour l'exécution d'une tâche. Chaque configuration est décrite par un contenu de configuration c'est-à-dire un ensemble de valeurs de paramètres de configuration stocké dans l'interface réseau, chaque contenu de configuration définissant une configuration de communication de l'interface et/ou une configuration opératoire de l'unité de traitement. Un contrôleur local prévu dans l'interface réseau fait adopter à cette interface et/ou à l'unité de traitement associée la configuration ou la série de configurations fournie par le contrôleur central. Lorsque la tâche a été exécutée, une nouvelle tâche peut être confiée par le contrôleur central au couple interface réseau/unité de traitement.

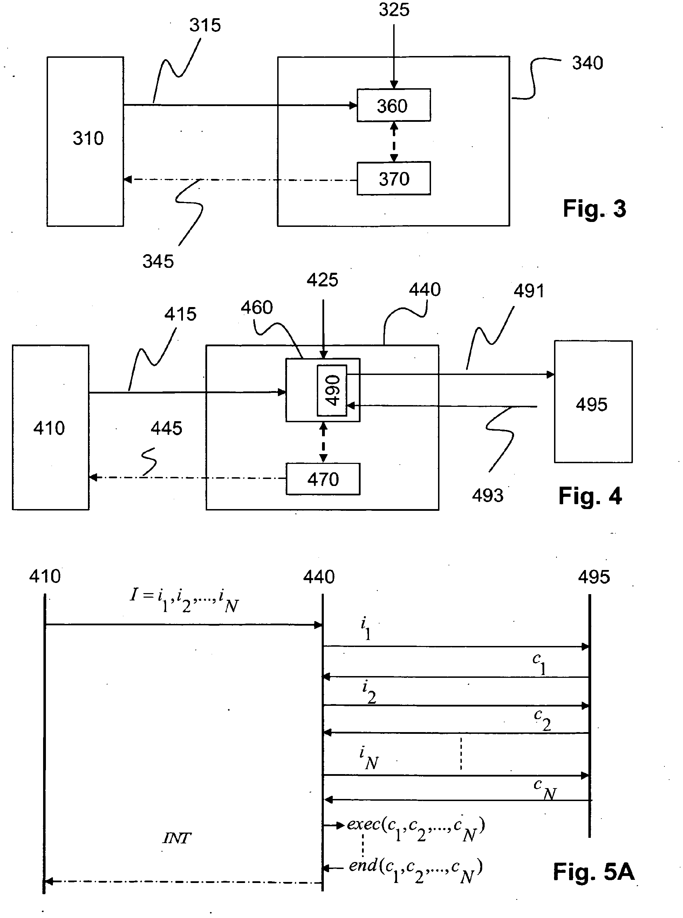

La Fig. 3 décrit schématiquement le fonctionnement d'un système sur puce utilisant le contrôle semi-distribué précité. Pour des raisons de simplification, une seule interface réseau 340 a été représentée et l'unité de traitement associée a été omise. L'interface réseau 340 comprend un contrôleur local 370 et une unité de gestion des configurations 360. On suppose que le contrôleur central 310 a préalablement fourni à l'interface réseau 340, par exemple lors d'une étape d'initialisation, l'ensemble des contenus de configuration relatifs à l'interface et/ou l'unité de traitement en question. Ces contenus de configuration sont stockés dans la mémoire de l'unité de gestion des configurations 360. Une reconfiguration dynamique de l'interface et/ou de l'unité de traitement peut intervenir selon l'un des deux modes suivants :
(a) soit le contrôleur central indique par un message de commande explicite 315 à l'interface réseau la configuration ou séquence de configurations à adopter. Ce mode est notamment utilisé pour configurer la réception des données au niveau de l'interface réseau ;
(b) soit un paquet de données reçu par l'interface contient dans son en-tête une étiquette 325 indiquant qu'une configuration ou une séquence de configurations particulière doit être adoptée pour le traitement des données dudit paquet. Ce mode, dit par commande incorporée, est notamment utilisé pour configurer l'émission des données par l'interface réseau et le traitement des données par l'unité de traitement.

Au terme d'un traitement, une interruption 345 est transmise au contrôleur central 310.

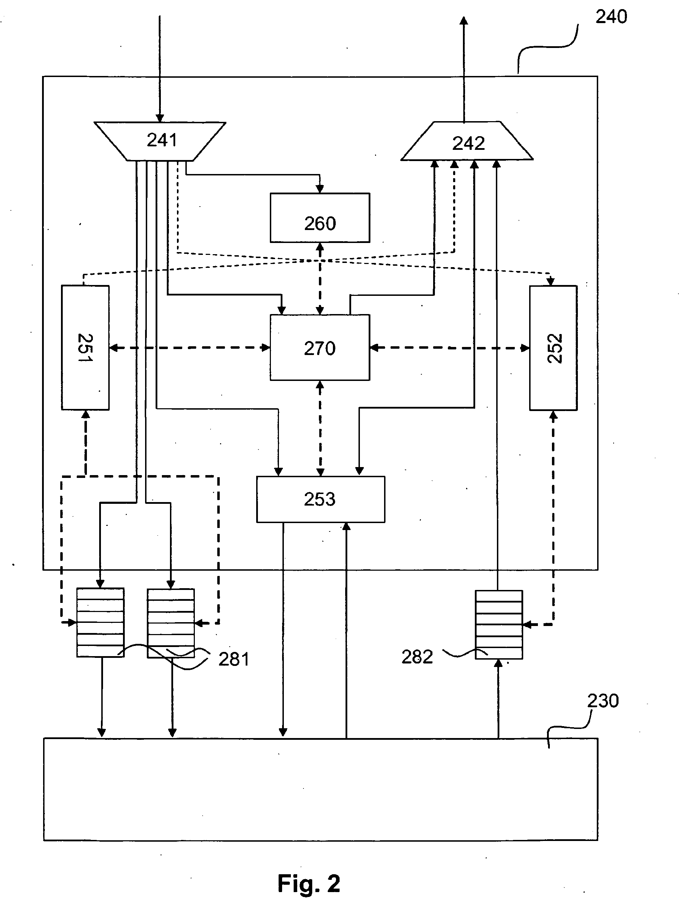

La Fig. 2 représente de manière plus détaillée la structure d'une interface réseau 240, associée à une unité de traitement 230. Par la suite le couple interface réseau et unité de traitement associée sera plus simplement désigné par le terme de « ressource ».

L'interface comprend un port d'entrée 241 et un port de sortie 242. Le port d'entrée 241 est apte à recevoir et à identifier les paquets de données en provenance du réseau ainsi qu'à les aiguiller vers les unités destinataires au sein de l'interface. Réciproquement, le port de sortie 242 est apte à arbitrer les requêtes d'émission d'unités émettrices au sein de l'interface et à transmettre sur le réseau les paquets de données issus de ces unités.

De manière générale, l'interface peut comporter plusieurs ports d'entrée et/ou de sortie ; ce sera le cas si l'interface est connectée à plusieurs noeuds du réseau, comme on l'a vu plus haut.

Les données échangées entre l'interface réseau 240 et l'unité de traitement 230 transitent par des buffers 281 et 282 réalisées sous forme de mémoires à accès partagé entre l'interface 240 et l'unité de traitement 230. Les données issues de l'interface sont écrites dans les buffers 281 et lues par l'unité de traitement 230. Les données issues de l'unité de traitement 230 sont écrites dans le buffer 282 et lues par l'interface. En règle générale, le nombre de buffers correspond au nombre de ports d'entrée/sortie de l'unité de traitement.

L'interface réseau comporte un contrôleur de communication d'entrée 251 (dénommé aussi ICC pour Input Communication Controller) et un contrôleur de communication de sortie 252 (dénommé aussi OCC pour Output Communication Controller).

Le contrôleur de communication d'entrée 251 gère le flux de paquets à destination de l'unité de traitement selon un mécanisme dit de gestion de crédits. Pour ce faire, il contrôle le remplissage des buffers 281. Ces buffers reçoivent, via le port 241, des données provenant de ressources du système émettant à destination de l'interface 240. En fonction de la place disponible dans ces buffers (ou encore de leurs taux de remplissage respectifs), le contrôleur de communication 251 alloue des « crédits » aux différentes ressources émettrices, un crédit indiquant à une ressource émettrice la quantité de données qu'elle peut transmettre à destination de l'interface 240. Les crédits sont alloués au moyen de messages spécifiques transmis par le contrôleur de communication d'entrée 251 aux ressources émettrices. Sur la Fig.2, on a représenté symboliquement par un fin trait discontinu la transmission de crédits. Le contrôleur de communication 251 tient à jour une table des crédits déjà alloués à chacune de ces ressources, le montant total des crédits qu'il peut allouer à une ressource émettrice étant fixé par le contenu de la configuration qu'il lui est imposée.

Le contrôleur de communication de sortie 252 gère le flux de paquets en provenance de l'unité de traitement 230. Pour ce faire, il contrôle le vidage d'un ou plusieurs buffers 282 (dans le cas illustré un buffer unique est présent) dans lesquels sont stockées les données issues de l'unité de traitement. En outre, le contrôleur de communication 252 reçoit des crédits alloués par les différentes ressources destinataires et vide le ou les buffers 282 à concurrence des crédits alloués. Le contrôleur de communication 252 tient à jour une table des crédits consommés pour chacune de ces ressources. Lorsque pour une ressource donnée le montant du crédit consommé atteint celui du montant alloué, le vidage du buffer est interrompu.

Les contrôleurs de communication 251 et 252 peuvent être constitués de contrôleurs élémentaires ayant chacun la charge d'un buffer 281 ou 282.

L'interface réseau 240 comprend de manière facultative un contrôleur d'unité de traitement 253. Ce contrôleur peut être intégré dans l'interface, réparti entre l'interface et l'unité de traitement ou bien encore intégré à l'unité de traitement. Le contrôleur d'unité de traitement 253 a pour fonction de piloter l'unité de traitement et de la paramétrer en fonction du contenu de la configuration qui lui est imposée. Le contrôleur 253 peut aussi obtenir en retour des informations sur l'avancement du traitement en cours ou recevoir des interruptions de l'unité 230.

Le contrôleur de communication d'entrée 251, le contrôleur de communication de sortie 252 et éventuellement le contrôleur d'unité de traitement 253 sont pilotés par le contrôleur local 270. Sur la Fig.2 les lignes de contrôle sont représentées par un trait épais et discontinu. Le contrôleur local reçoit de l'unité de gestion de configurations 260 les valeurs des paramètres de la configuration courante à appliquer (ou contenus de configuration). Ces valeurs servent à configurer :
(a) le contrôleur de communication d'entrée 251, par exemple les identités des ressources émettrices et, pour chacune d'elles, le montant total de crédits à lui allouer ainsi que le quantum de crédits à transmettre ;
(b) le contrôleur de communication de sortie 252, par exemple les identités des ressources destinataires ;
(c) l'unité de traitement 230, par exemple son mode opératoire. Si le contrôleur 253 est présent, la configuration de l'unité de traitement 230 est réalisée via ce dernier.

L'unité de gestion des configurations 260 reçoit du contrôleur central, lors de la phase d'initialisation d'une tâche que la ressource doit effectuer, l'ensemble des contenus de configuration nécessaires à la réalisation de cette tâche.

Le système sur puce à contrôle semi-distribué qui vient d'être décrit ne présente pas les temps de latence élevés inhérents aux systèmes à contrôle centralisé. Il comporte cependant un certain nombre d'inconvénients. Tout d'abord, l'ensemble des contenus de configuration relatifs à une tâche que doit effectuer la ressource est stocké localement. Si la tâche à effectuer par la ressource est complexe, la taille mémoire de l'unité de gestion des configurations 260 peut être conséquente. Ensuite, lors d'une commande de configuration incorporée à un paquet de données, il se peut que la configuration requise ne soit pas présente dans l'unité de gestion des configurations. Il y a alors une situation de blocage qui ne peut être résolue que par l'intervention du contrôleur central. Dans des applications où le flot de données subit plusieurs étapes de division-fusion, on est amené à prévoir des tâches de faible granularité temporelle. Cette situation de blocage peut alors se répéter fréquemment et conduire à des temps de latence rédhibitoires.

Le but de la présente invention est de remédier aux inconvénients précités, c'est-à-dire de proposer un système sur puce à contrôle semi-distribué qui ne requiert pas de mémoire de stockage importante dans les interfaces réseau tout en limitant de manière significative l'occurrence de situations de blocage.

### EXPOSÉ DE L'INVENTION

La présente invention est définie par une interface réseau pour réseau sur puce adaptée à interfacer une unité de traitement de données avec ledit réseau, ladite interface et/ou ladite unité de traitement pouvant être configurée(s) selon une pluralité de configurations, l'interface réseau comprenant un contrôleur local adapté à configurer ladite interface et/ou ladite unité de traitement selon lesdites configurations au moyen de contenus de configuration, chaque contenu de configuration définissant une configuration de communication de l'interface et/ou une configuration opératoire de l'unité de traitement et chaque configuration étant indexée par un indice. L'interface réseau comprend une unité de gestion des configurations incluant un module client adapté à :
- transmettre via ledit réseau, lorsque le contenu d'une configuration n'est pas disponible dans ladite interface, une requête ayant pour argument l'indice de la configuration non disponible ;
- recevoir via ledit réseau d'un serveur de configuration, le contenu de ladite configuration non disponible ;
- délivrer au contrôleur local le contenu de la configuration ainsi reçu.

L'invention est également définie par un système sur puce comprenant un réseau sur puce lui-même constitué de routeurs interconnectés entre eux au moyen de liaisons physiques, une pluralité d'interfaces réseau associées chacune à une unité de traitement, un contrôleur central adapté à contrôler l'exécution d'une tâche par lesdites interfaces réseau et/ou lesdites unités de traitement, dans lequel :
- chaque unité de traitement est connectée audit réseau par une interface réseau telle que définie plus haut ;
- au moins un serveur de configuration est connecté audit réseau, ledit serveur étant adapté à transmettre, sur requête d'une interface réseau ayant pour argument un indice de configuration, une réponse à ladite interface incluant le contenu de configuration correspondant audit indice, ledit contenu permettant à l'interface réseau de configurer au moins un élément de ladite interface et/ou l'unité de traitement associée pour l'exécution de ladite tâche.

L'invention concerne aussi un serveur pour un tel système sur puce, comprenant une mémoire adaptée à stocker les contenus de configuration des configurations possibles des interfaces réseau de ladite pluralité d'interfaces ou dudit sous-ensemble de cette pluralité ainsi que les contenus de configuration des configurations possibles des unités de traitement associées, ledit serveur étant en outre adapté à analyser une requête émise par une interface réseau ayant pour argument un indice de configuration, à déterminer à partir dudit indice l'identité de l'interface réseau émettrice, à extraire de ladite mémoire le contenu de configuration relatif à la configuration indexée par cet indice et à retourner à ladite interface réseau émettrice ledit contenu de configuration.

L'invention concerne encore un terminal mobile ou une station de base comprenant un modem en bande de base implémenté par le système sur puce tel que défini plus haut.

L'invention concerne enfin un procédé d'exécution d'une tâche par une interface réseau et/ou son unité de traitement associée appartenant à un système sur puce tel que défini plus haut :
- transmission par le contrôleur central à ladite interface réseau d'une séquence d'indices, chaque indice étant représentatif d'une configuration de ladite interface réseau et/ou de son unité de traitement associée ;
- pour chaque contenu de configuration non disponible au sein de ladite interface, transmission par l'interface d'une requête au serveur de configuration (495) ayant pour argument l'indice de la configuration non disponible ;
- réception par ladite interface de chaque contenu de configuration non disponible retourné par le serveur ;
- exécution par ladite interface, et/ou son unité de traitement associée, des configurations indexées par lesdits indices dans l'ordre de ladite séquence, une configuration n'étant exécutée qu'après que son contenu soit disponible dans l'interface et que l'exécution de la configuration précédente ait été terminée.

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
la Fig. 1 représente schématiquement un système sur puce de l'état de la technique ;
la Fig. 2 représente schématiquement une structure connue d'interface réseau associée à une unité de traitement ;
la Fig. 3 illustre le fonctionnement d'un système sur puce au moyen d'un contrôle semi-distribué connu de l'état de la technique ;
la Fig. 4 illustre le fonctionnement d'un système sur puce utilisant un contrôle semi-distribué selon l'invention ;
les Figs. 5A à 5C représentent des chronogrammes de changement de configuration ;
la Fig. 6 représente la structure d'une interface réseau selon un mode de réalisation de l'invention ;
les Figs. 7A à 7D représentent la structure d'une interface réseau selon différentes variantes de réalisation de l'invention.

### EXPOSÉ DÉTAILLÉ DE MODES DE RÉALISATION PARTICULIERS

L'idée à la base de l'invention est de déporter le stockage des contenus de configuration à l'extérieur des interfaces réseau et de les regrouper au sein d'un ou plusieurs serveurs de configuration.

La Fig. 4 illustre schématiquement le mode de fonctionnement d'un système sur puce utilisant un serveur de configuration 495. Le système sur puce comporte également un contrôleur central 410 et une pluralité d'unités de traitement connectées au réseau via des interfaces de réseau. Pour des raisons de simplification une seule interface réseau 440 a été représentée et l'unité de traitement associée a été omise.

Comme précédemment, une reconfiguration de l'interface et/ou de l'unité de traitement associée peut intervenir selon deux modes distincts : un mode explicite dans lequel le contrôleur central indique directement à l'interface 440 la configuration ou la séquence de configurations à adopter et un mode par commande incorporée où un paquet de données reçu indique (au moyen d'une étiquette 425 placée dans son en-tête) la configuration ou la séquence de configurations à adopter pour son traitement.

A la différence notable de la Fig. 3 cependant, le contrôleur central ne fournit pas à l'interface les contenus de configuration, c'est-à-dire les valeurs de paramètres servant à configurer les contrôleurs de communication et l'unité de traitement, ni lors de la phase d'initialisation d'une tâche, ni ultérieurement si une configuration n'est pas disponible dans une interface réseau.

Pour ce faire, les configurations possibles des différentes ressources sont indexées au moyen d'indices. Les indices des configurations ainsi que leurs contenus respectifs sont stockés au sein d'un serveur unique ou d'une pluralité de serveurs répartis dans le réseau comme il sera expliqué plus loin. Les indices des configurations ont avantageusement une structure composite. Plus précisément les indices peuvent comporter plusieurs champs ou sous-indices :
- un champ identifiant la ressource à laquelle la configuration s'applique ;
- un champ optionnel identifiant le contexte d'utilisation de la ressource. Par exemple si le système implémente un modem en bande de base d'un terminal multistandard, le contexte d'utilisation pourra être le standard utilisé ;
- un champ identifiant l'élément de la ressource auquel la configuration s'applique, par exemple le contrôleur de communication d'entrée, le contrôleur de communication de sortie, l'unité de traitement ;
- un champ identifiant la configuration elle-même au niveau dudit élément.

Lorsque le contrôleur central veut imposer une configuration ou une séquence de configurations à une ressource, il transmet en 415 à l'interface réseau l'indice ou la séquence d'indices correspondants. De manière avantageuse, afin de réduire la quantité d'information transmise sur le réseau, les séquences de configuration pourront être elles mêmes indexées de manière arborescente, de sorte que seul l'indice de la séquence de configurations sera transmis à l'interface. Si une séquence de configurations consiste en une répétition d'une configuration ou d'une séquence élémentaire de configurations, le contrôleur central transmet l'indice de ladite configuration ou de ladite séquence complémentaire, assorti du nombre de fois qu'elle doit être exécutée.

De manière similaire, pour une commande incorporée dans un paquet de données, l'en-tête contiendra une étiquette 425 donnant l'indice de la configuration ou de la séquence de configurations à adopter pour le traitement des données de ce paquet.

Dans l'un ou l'autre mode, pour un indice donné, l'unité de gestion des configurations 460 recherche si le contenu de la configuration ou de la séquence de configurations est présent dans sa mémoire locale. A cette fin, l'unité de gestion des configurations 460 consulte si l'indice en question est présent dans son index. L'index est mis à jour lorsqu'un contenu de configuration est stocké dans la mémoire ou en est supprimé.

Si l'indice est présent dans l'index, l'unité de gestion des configurations 460 fournit le contenu de la configuration correspondante au contrôleur local qui se charge de configurer les contrôleurs de communication en conséquence.

Si l'indice est absent de l'index, un module client 490 de l'unité de gestion 460 transmet, via le réseau, une requête 491 au serveur de configuration 495. La requête contient en argument l'indice en question. Le serveur de configuration 495 retourne alors au module client 490 de la ressource requérante, une réponse 493 comprenant le contenu de la configuration correspondant à l'indice. L'identité de la ressource requérante est déterminée à partir du champ ressource de l'indice. Sur réception de la réponse, l'unité de gestion des configurations 460 met son index à jour, stocke le contenu de la configuration dans sa mémoire puis la fournit au contrôleur local comme précédemment. La mémoire de l'unité 460 est par exemple organisée sous forme de FIFO de sorte que les contenus de configurations les plus anciennes soient écrasés au fur et à mesure du stockage des contenus des configurations plus récentes. Alternativement ou cumulativement, la mémoire peut être divisée en deux parties, chaque partie ayant une structure FIFO, la première partie étant dédiée aux configurations fréquentes, la seconde aux configurations plus rares, de sorte qu'une configuration rare ne pourra évincer une configuration fréquente. De manière générale la mémoire de l'unité 460 joue le rôle d'une mémoire cache. Elle stocke localement au sein de l'interface 440, les configurations les plus fréquentes et/ou les plus récentes présentes dans la mémoire de masse du serveur 495. Cette mémoire est également associative dans la mesure où la recherche d'un contenu d'une configuration est effectuée au moyen de son indice.

Dans le fonctionnement qui vient d'être décrit, on remarque que le contrôleur central n'est pas interrompu lorsqu'une configuration n'est pas disponible dans une interface réseau du système. Toutefois, le cas échéant, l'interface 440 transmet une interruption 445 au contrôleur central pour l'avertir qu'une tâche est terminée.

Comme déjà mentionné, un ou plusieurs serveur(s) de configuration peut/peuvent être prévu(s) dans le système sur puce. Ce ou ces serveurs sont des unités de traitement particulières. Lorsque plusieurs serveurs sont présents, leurs domaines de compétence respectifs sont répartis selon au moins l'une des modalités suivantes :
- compétence géographique : les différents serveurs prennent en charge différentes zones géographiques de la puce ;
- compétence fonctionnelle : les différents serveurs prennent en charge différentes fonctions du système. Par exemple, si le système implémente un module d'émission/réception, un premier serveur pourra être compétent pour la configuration des ressources de l'émetteur et un second serveur pourra être compétent pour la configuration des ressources du récepteur ;
- compétence hiérarchique : un serveur principal reçoit toutes les requêtes et les redirige selon leur type vers des serveurs de configuration secondaires.

Selon un mode particulier mais non préférentiel de réalisation, le serveur de configuration est intégré dans le contrôleur central. Toutefois, à la différence notable de l'art antérieur, les contenus de configuration ne sont pas fournis sur interruption du contrôleur central mais sur requête du module client d'une interface réseau auprès du serveur de configuration.

Le ou chaque serveur de configuration traite les requêtes au fur et à mesure qu'il les reçoit. Il peut être conduit à stocker les requêtes dans un buffer FIFO, le temps de répondre à une requête pendante. En cas de saturation du buffer, il renvoie un paquet d'acquittement négatif (*NACK*) à la ressource requérante pour lui signaler que sa requête n'a pu aboutir et qu'elle doit la retransmettre ultérieurement.

Les Figs. 5A à 5C représentent des chronogrammes de changement de configuration dans le cadre du système représenté en Fig. 4.

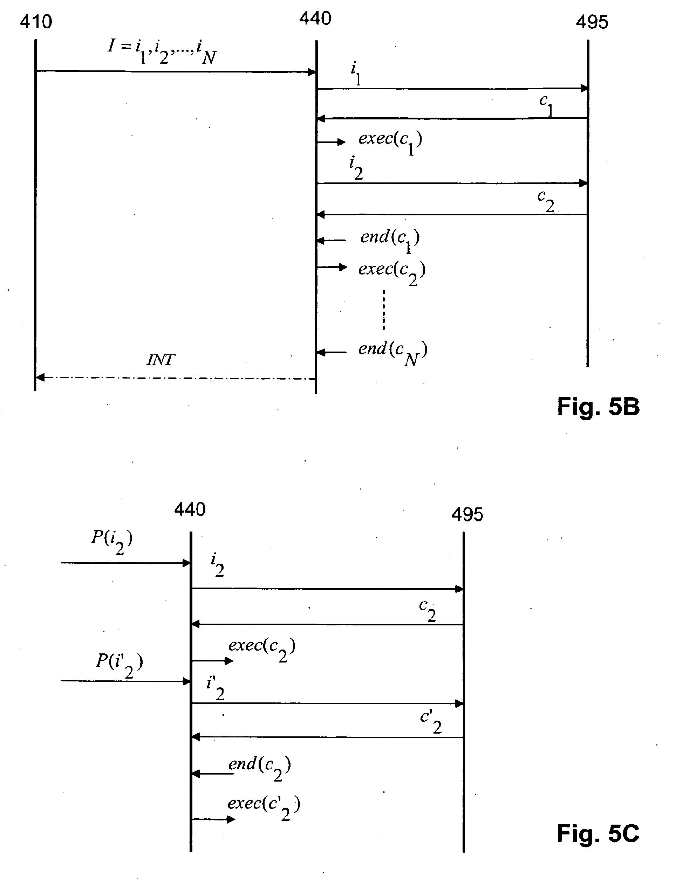

Les Figs. 5A et 5B sont relatives à des changements de configuration sur commande explicite du contrôleur central.

Dans l'exemple illustré en Fig. 5A, le contrôleur central 410 impose à la ressource une séquence de configurations d'indices *i*₁*,i*₂,...,*i_{N}* correspondant à une tâche déterminée. On supposera pour simplifier que la mémoire de l'unité de gestion des configurations est vide. Le module client de l'interface réseau envoie alors successivement des requêtes d'arguments respectifs *i*₁*, i*₂,...*i_{N}* au serveur de configuration qui lui retourne les contenus de configuration *c*₁*,c*₂,...,*c*_{N}*.* Dans ce mode de réalisation, l'unité de gestion des configurations attend d'être en possession de tous les contenus des configurations avant de les fournir au contrôleur local. Ce dernier fait ensuite exécuter la séquence de configurations dans l'ordre indiqué. La configuration d'indice *i*₁ correspond par exemple à une configuration du contrôleur de communication d'entrée pour la réception de données d'une ressource émettrice. Les configurations d' indices *i*₂, ... *i*_{*N*-1} correspondent par exemple à des configurations de l'unité de traitement. La configuration d'indice *i_{N}* correspond par exemple à une configuration de contrôleur de communication de sortie pour la transmission des données traitées vers une ressource destinataire.

Au terme de l'exécution de la tâche en question, l'interface réseau avertit le contrôleur central au moyen d'une interruption *INT.*

Dans l'exemple illustré en Fig. 5B, la même séquence d'indices *i*₁*,i*₂,...,*i_{N}* est envoyée par le contrôleur central 410 à l'interface réseau 440. A la différence de l'exemple précédent toutefois, dès que le premier contenu de la configuration *c*₁ est reçu, le contrôleur local la fait exécuter. Pendant son exécution, l'unité de gestion des configurations transmet par anticipation (*prefetching*) une requête d'argument *i*₂ au serveur de configuration. Dès que l'exécution de la configuration d'indice *i*₁ est terminée (*end*(*c₁*)) et que le contenu *c*₂ est disponible, la configuration d'indice *i*₂ est appliquée par le contrôleur local. Les requêtes sont lancées tour à tour sans attendre la fin de l'exécution de la configuration précédente. Comme dans l'exemple précédent, au terme de l'exécution de dernière configuration de la tâche (*end*(*e_{N}*))*,* une interruption *INT* est transmise au contrôleur central.

La Fig. 5C illustre le cas de commandes de configuration incorporées dans des paquets de données successifs *P(i*₂*)* et *P*(*i'*₂)*.* On suppose que les configurations d'indices *i*₂ et *i'*₂ sont des configurations de l'unité de traitement et que le paquet *P*(*i'*₂) est reçu lors du traitement du paquet *P*(*i*₂)*.* Comme dans l'exemple de la Fig. 5B, l'interface réseau lance (si la configuration n'est pas disponible) une requête d'argument *i*'₂ avant que la configuration d'indice *i*₂ soit terminée (prefetching). Au terme de cette dernière (*end*(*c*₂)), la configuration d'indice *i*'₂ est exécutée à son tour.

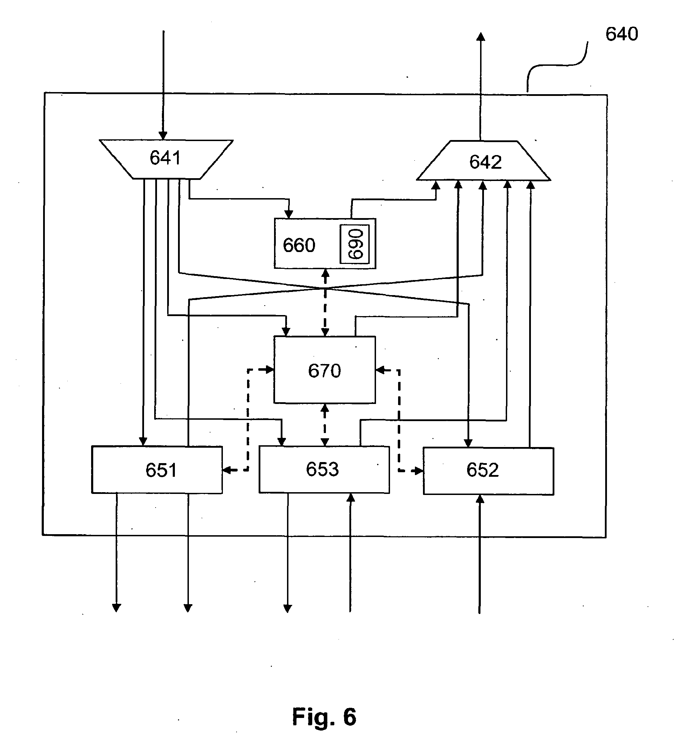

La Fig. 6 représente la structure d'une interface réseau 640 selon un mode de réalisation de l'invention. On y distingue un port d'entrée 641, un port de sortie 642, un contrôleur de communication d'entrée 651, un contrôleur de communication de sortie 652, un contrôleur d'unité de traitement facultatif 653. Aux remarques suivantes près, ces éléments sont identiques à ceux de la Fig. 2.

Pour des raisons de commodité, les buffers (désignés par 281 et 282 en Fig. 2) contrôlés par les contrôleurs de communication d'entrée et de sortie 651 et 652 ont été représentés comme intégrés au sein de ceux-ci. Ainsi, on remarque que le flux de données provenant du port d'entrée 641 et à destination de l'unité de traitement transite par le contrôleur de communication d'entrée 651. De même les données provenant de l'interface de traitement et à destination d'une ressource réceptrice transitent par le contrôleur de sortie 652. Dans une variante de réalisation, cette représentation de pure commodité est aussi une représentation réelle. Selon cette variante, en effet, le contrôleur de communication d'entrée 651 est susceptible d'effectuer des opérations de démultiplexage, de décapsulation et/ou de concaténation. De même, le contrôleur de communication de sortie 652 est susceptible d'effectuer des opérations de multiplexage, de segmentation et/ou d'encapsulation des données avant de les transmettre sur le réseau.

L'interface réseau 640 comprend en outre une unité de gestion des configurations 660 connectée au port d'entrée 641 et au port de sortie 642. Les différents contrôleurs ainsi que l'unité de gestion 660 sont contrôlés par le contrôleur local 670, réalisé par exemple sous forme d'unité micro-séquencée.

L'unité de gestion des configurations comprend un module client 690 (identique au module client 490 déjà décrit) adapté à transmettre des requêtes au(x) serveur(s) de configuration et à recevoir les contenus des configurations demandées.

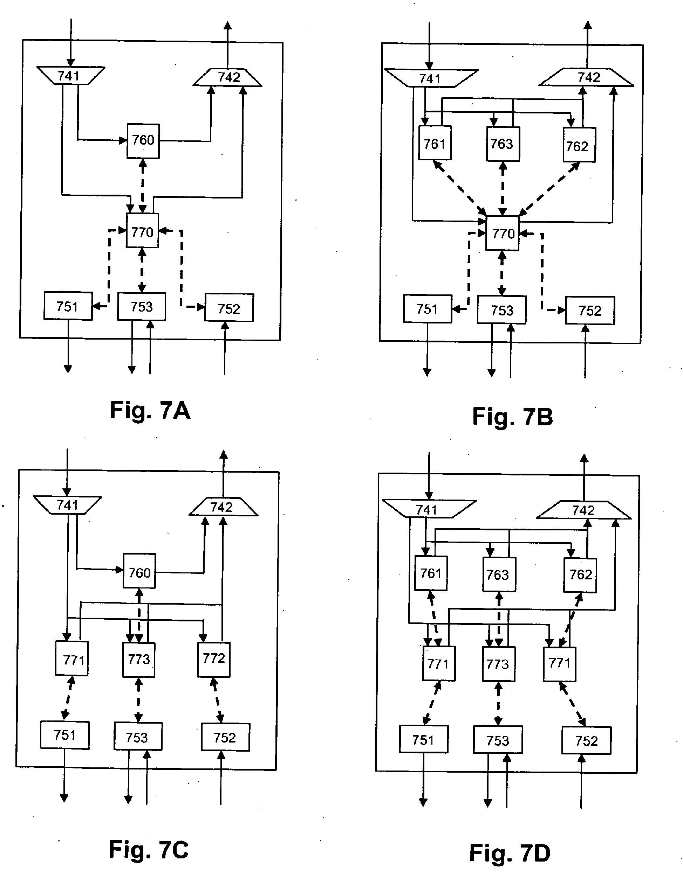

Les Figs. 7A à 7D représentent des variantes de réalisation d'une interface réseau selon l'invention. Sur ces figures, des éléments portant même signe de référence sont identiques. Pour alléger les figures, les liaisons entre les contrôleurs 751, 752, 753, d'une part, et les ports d'entrée 741 et de sortie 742, d'autre part, ont été omises.

Afin de permettre une comparaison plus aisée, l'interface réseau de la Fig. 6 a été reprise en Fig. 7A. On note que la variante de réalisation de la Fig. 7B se distingue de celle de la Fig. 7A en ce que l'unité de gestion 760 est divisée en unités de gestion élémentaires distinctes 761, 762, 763 destinées à gérer les configurations respectives des contrôleurs 751, 752 et 753, chaque unité de gestion élémentaire comprenant un module client (non représenté). Lorsque le contrôleur 753 est absent, l'unité de gestion 763 gère directement la configuration de l'unité de traitement. La variante de réalisation de la Fig. 7C se distingue de celle de la Fig. 7A en ce que le contrôleur local 770 est divisé en contrôleurs locaux élémentaires distincts 771, 772, 773 configurant et pilotant respectivement les contrôleurs 751, 752 et 753. La variante de la Fig. 7D conjugue à la fois des unités de gestion élémentaires distinctes au sens de la Fig. 7B et des contrôleurs locaux élémentaires distincts au sens de la Fig. 7C.

Le système sur puce selon l'invention peut notamment être utilisé pour implémenter un modem en bande de base d'un terminal mobile configurable par logiciel (*software radio*), notamment pour supporter différents standards de téléphonie mobile 3G (DS-CDMA) et/ou 4G (MC-CDMA voire MIMO MC-CDMA).

Dans le cas d'un modem MC-CDMA les unités de traitement peuvent être, à titre d'exemple :
- pour la partie émission : un codeur canal, un modulateur binaire à symbole, un module d'étalement spectral, un modulateur OFDM ;
- pour la partie réception : un correcteur de synchro temporelle et fréquentielle, un démodulateur OFDM, un estimateur de canal, un égaliseur, un module de désétalement spectral, un démodulateur symbole à binaire et un décodeur de canal.

De manière similaire, le système sur puce selon l'invention peut également être utilisé pour implémenter un modem en bande de base d'une station de base configurable par logiciel.

## Revendications

1. Interface réseau (440, 640) pour réseau sur puce adaptée à interfacer une unité de traitement (130, 230) de données avec ledit réseau, ladite interface et/ou ladite unité de traitement pouvant être configurée(s) selon une pluralité de configurations, l'interface réseau comprenant un contrôleur local (470, 670) adapté à configurer ladite interface et/ou ladite unité de traitement selon lesdites configurations au moyen de contenus de configuration, chaque contenu de configuration définissant une configuration de communication de l'interface et/ou une configuration opératoire de l'unité de traitement,
ladite interface réseau étant **caractérisée en ce que**, chaque configuration étant indexée par un indice, elle comprend une unité de gestion des configurations (460, 660) incluant un module client (490, 690) adapté à :
- transmettre via ledit réseau, lorsque le contenu d'une configuration n'est pas disponible dans ladite interface, une requête ayant pour argument l'indice de la configuration non disponible ;
- recevoir via ledit réseau d'un serveur de configuration, le contenu de ladite configuration non disponible ;
- délivrer au contrôleur local le contenu de la configuration ainsi reçu.

2. Interface réseau selon la revendication 1, **caractérisée en ce que** l'unité de gestion des configurations comprend une mémoire associative adaptée à stocker les contenus respectifs des configurations disponibles ainsi que les indices de ces configurations.

3. Interface réseau selon la revendication 2, **caractérisée en ce que** l'unité de gestion des configurations comprend une pluralité d'unités de gestion élémentaires (761, 762, 763), chaque unité de gestion élémentaire étant adaptée à gérer la configuration d'un élément ou d'une pluralité d'éléments (751, 752, 753) de l'interface réseau ou bien à gérer la configuration de ladite unité de traitement.

4. Interface réseau selon l'une des revendications précédentes, **caractérisée en ce que** le contrôleur local comprend une pluralité de contrôleurs locaux élémentaires (771, 772, 773), chaque contrôleur local élémentaire contrôlant un élément ou une pluralité d'éléments (751, 752, 753) de l'interface réseau.

5. Interface réseau selon la revendication 3 ou 4, caractérisée en que l'un desdits éléments est un contrôleur de communication d'entrée (751) adapté à allouer des crédits de transmission à une ressource émettrice ou une pluralité de ressources émettrices connectée(s) audit réseau.

6. Interface réseau selon la revendication 3 ou 4, caractérisée en que l'un desdits éléments est un contrôleur de communication de sortie (753) adapté à transmettre à une ressource destinataire ou à une pluralité de ressources destinataires des données issues de l'unité de traitement en fonction de crédits de transmission qui lui ou leur ont été respectivement alloués.

7. Interface réseau selon l'une des revendications précédentes, **caractérisée en ce que** le module client (490, 690) de l'unité de gestion des configurations (460, 660) est adapté à transmettre une requête ayant pour argument l'indice d'une configuration non disponible dans l'interface pendant que le contrôleur central configure ladite interface et/ou ladite unité de traitement selon une configuration qui lui a été précédemment transmise par ladite unité de gestion.

8. Interface réseau selon l'une des revendications précédentes, **caractérisée en ce que** chaque indice de configuration comprend :
un champ identifiant ladite interface réseau à laquelle ladite configuration s'applique, parmi une pluralité d'interfaces réseau ;
un champ identifiant l'élément de l'interface ou l'unité de traitement à laquelle ladite configuration s'applique ;
un champ identifiant ladite configuration parmi une pluralité de configurations possibles dudit élément ou de ladite unité de traitement.

9. Interface réseau selon la revendication 8, **caractérisée en ce que** ledit indice de configuration comprend en outre un champ identifiant un contexte d'utilisation de l'unité de traitement dans lequel elle s'applique.

10. Système sur puce comprenant un réseau sur puce (100) lui-même constitué de routeurs (120) interconnectés entre eux au moyen de liaisons physiques (125), une pluralité d'interfaces réseau (140) associées chacune à une unité de traitement (130), un contrôleur central (110, 410) adapté à contrôler l'exécution d'une tâche par lesdites interfaces réseau et/ou lesdites unités de traitement, **caractérisé en ce que** :
- chaque unité de traitement est connectée audit réseau par une interface réseau (440, 640) selon l'une des revendications précédentes ;
- au moins un serveur de configuration (495) est connecté audit réseau, ledit serveur étant adapté à transmettre, sur requête d'une interface réseau ayant pour argument un indice de configuration, une réponse à ladite interface incluant le contenu de configuration correspondant audit indice, ledit contenu permettant à l'interface réseau de configurer au moins un élément de ladite interface et/ou l'unité de traitement associée pour l'exécution de ladite tâche.

11. Système sur puce selon la revendication 10, **caractérisé en ce qu'**il comprend une pluralité de serveurs de configuration, chaque serveur étant compétent pour répondre à des requêtes issues d'interfaces réseau appartenant à un sous-ensemble distinct de ladite pluralité d'interfaces.

12. Serveur pour un système sur puce selon la revendication 10 ou 11, **caractérisé en ce qu'**il comprend une mémoire adaptée à stocker les contenus de configuration des configurations possibles des interfaces réseau de ladite pluralité d'interfaces ou dudit sous-ensemble de cette pluralité ainsi que les contenus de configuration des configurations possibles des unités de traitement associées, ledit serveur étant en outre adapté à analyser une requête émise par une interface réseau ayant pour argument un indice de configuration, à déterminer à partir dudit indice l'identité de l'interface réseau émettrice, à extraire de ladite mémoire le contenu de configuration relatif à la configuration indexée par cet indice et à retourner à ladite interface réseau émettrice ledit contenu de configuration.

13. Serveur selon la revendication 12, **caractérisé en ce qu'**il comprend un outre un buffer FIFO pour stocker jusqu'à leur traitement les requêtes qui lui sont transmises par les interfaces réseau et des moyens d'émission d'un acquittement négatif aux interfaces réseau dont les requêtes n'ont pu être stockées lors d'une saturation dudit buffer.

14. Terminal mobile comprenant un modem en bande de base implémenté par un système sur puce selon la revendication 10 ou 11.

15. Station de base comprenant un modem en bande de base implémenté par un système sur puce selon la revendication 10 ou 11.

16. Procédé d'exécution d'une tâche par une interface réseau et/ou son unité de traitement associée appartenant à un système sur puce (100) selon la revendication 10 comprenant les étapes suivantes :
- transmission (445) par le contrôleur central (410) à ladite interface réseau (440) d'une séquence d'indices, chaque indice étant représentatif d'une configuration de ladite interface réseau et/ou de son unité de traitement associée ;
- pour chaque contenu de configuration non disponible au sein de ladite interface, transmission (491) par l'interface d'une requête au serveur de configuration (495) ayant pour argument l'indice de la configuration non disponible ;
- réception (493) par ladite interface de chaque contenu de configuration non disponible retourné par le serveur ;
- exécution par ladite interface, et/ou son unité de traitement associée, des configurations indexées par lesdits indices dans l'ordre de ladite séquence, une configuration n'étant exécutée qu'après que son contenu soit disponible dans l'interface et que l'exécution de la configuration précédente ait été terminée.

17. Procédé selon la revendication 16, **caractérisé en ce qu'**une requête d'une configuration non disponible est transmise au serveur de configuration pendant qu'une configuration précédente est en cours d'exécution.

## Claims

1. Network interface (440, 640) for network on chip adapted to interface a data processing unit (130,230) with said network, wherein said interface and/or said processing unit can be configured according to a plurality of configurations, wherein the network interface comprised a local controller (470, 670) adapted to configure said interface and/or said processing unit according to said configurations by means of configuration contents, wherein each configuration content defines a communication configuration of the interface and/or an operating configuration of the processing unit,
wherein said network interface is **characterised in that** each configuration is indexed by an index, it comprises a management configuration unit (460, 660) including a client module (490, 690) adapted to:
- transmit via said network, when the content of a configuration is unavailable in said interface, a request having as argument the index of the unavailable configuration;
- receive, via said network, from a configuration server, the content of said unavailable configuration;
- provide the local controller with the content of the configuration thus received.

2. Network interface of claim 1, **characterised in that** the management configuration unit comprises an associative memory adapted to store the respective contents of the available configurations as well as the indices of these configurations.

3. Network interface of claim 2, **characterised in that** the management configuration unit comprises a plurality of elementary management units (761, 762, 763), wherein each elementary management unit is adapted to manage the configuration of an element or a plurality of elements (751, 752, 753) of the network interface or to manage the configuration of said processing unit.

4. Network interface according to one of the previous claims, **characterised in that** the local controller comprises a plurality of elementary local controllers (771, 772, 773), wherein each local controller controls an element or a plurality of elements (751, 752, 753) of the network interface.

5. Network interface according to claim 3 or 4, **characterised in that** one of said elements is an input communication controller (751) adapted to allocate transmission credits to an emitting resource or a plurality of emitting resources connected to said network.

6. Network interface according to claim 3 or 4, **characterised in that** one of said elements is an output communication controller (753) adapted to transmit to a destination resource or a plurality of destination resources, data issued from the processing unit, according to the transmission credits that have been allocated to it/them respectively.

7. Network interface according to one of the previous claims, **characterised in that** the client module (490, 690) of the management configuration unit (460, 660) is adapted to transmit a request whose argument is the index of an unavailable configuration in the interface while the central controller configures said interface and/or said processing unit according to a configuration that has previously been transmitted to it by said management unit.

8. Network interface according to one of the previous claims, **characterised in that** each configuration index comprises:
a field identifying said network interface to which said configuration applies, among a plurality of network interfaces;
a field identifying the element of the interface or the processing unit to which said configuration applies;
a field identifying said configuration from a plurality of possible configurations of said element or of said processing unit.

9. Network interface according to claim 8, **characterised in that** said configuration index also comprises a field identifying a context of use of the processing unit in which it is applied.

10. System on chip comprising a network on chip (100) itself composed of routers (120) connected to one another by means of physical connections (125), a plurality of network interfaces (140) each associated to a processing unit (130), a central controller (110, 410) adapted to control the running of a task by said network interfaces and/or said processing units, **characterised in that**:
- each processing unit is connected to said network via an network interface (440, 640) of one of the previous claims;
- at least one configuration server (495) is connected to said network, wherein said server is adapted to transmit, upon request from an network interface whose argument is a configuration index, a response to said interface including the configuration content corresponding to said index, wherein said content permits the network interface to configure at least one element of said interface and/or the associated processing unit to run said task.

11. System on chip according to claim 10, **characterised in that** it comprises a plurality of configuration servers, wherein each server is competent to respond to requests issued from network interfaces belonging to a distinct sub-assembly of said plurality of interfaces.

12. Server for a system on chip according to claim 10 or 11, **characterised in that** it comprises a memory adapted to store the configuration contents of the possible configurations of the network interfaces of said plurality of interfaces or of said sub-assembly of this plurality as well as the configuration contents of the possible configurations of the associated processing units, wherein said server is also adapted to analyse a request emitted by a network interface whose argument is a configuration index, to determine from said index the identity of the emitting network interface, to extract from said memory the configuration content concerning the configuration indexed by this index and to return to said emitting network interface said configuration content.

13. Server according to claim 12, **characterised in that** it also comprises a FIFO buffer to store, until they are processed, the requests that are sent to it by the network interfaces and means of emitting a negative acknowledgement to the network interfaces whose requests have not been stored during saturation of said buffer.

14. Mobile terminal comprising a base band modem implemented by a system on chip of claim 10 or 11.

15. Base station comprising a base band modem implemented by a system on chip of claim 10 or 11.

16. Process for running a task by a network interface and/or its associated processing unit belonging to a system on chip (100) of claim 10, comprising the following steps:
- transmission (445) by the central controller (410) to said network interface (440) of a sequence of indices, wherein each index is representative of a configuration of said network interface and/or its associated processing unit;
- for each unavailable configuration content in said interface, transmission (491) via the interface of a request to the configuration server (495) whose argument is the index of the unavailable configuration;
- reception (493) by said interface of each unavailable configuration content returned by the server;
- running by said interface, and/or its associated processing unit, of configurations indexed by said indices in the order of said sequence, wherein a configuration is only run once its content is available in the interface and the configuration has ended.

17. Process according to claim 16, **characterised in that** a request for an unavailable configuration is transmitted to the configuration server while a previous configuration is being run.

## Patentansprüche

1. Netzwerkschnittstelle (440, 640) für ein Einchip-Netzwerk, das dazu ausgelegt ist, eine Schnittstelle für eine Datenverarbeitungseinheit (130, 230) mit dem Netzwerk zu bilden, wobei die Schnittstelle und/ oder die Verarbeitungseinheit gemäß einer Mehrzahl von Konfigurationen konfiguriert sein kann/können, wobei die Netzwerkschnittstelle einen lokalen Controller (470, 670) umfasst, der dazu ausgelegt ist, die Schnittstelle und/oder die Verarbeitungseinheit mit Hilfe von Konfigurationsinhalten gemäß den Konfigurationen zu konfigurieren, wobei jeder Konfigurationsinhalt eine Konfiguration der Kommunikation der Schnittstelle und/oder eine Arbeitskonfiguration der Verarbeitungseinheit definiert,
wobei die Netzwerkschnittstelle **dadurch gekennzeichnet ist, dass** jede Konfiguration durch einen Index indiziert ist, und dass sie eine Einheit zur Verwaltung der Konfigurationen (460, 660) umfasst, die ein Clientmodul (490, 690) enthält, das dazu ausgelegt ist:
- dann, wenn der Inhalt einer Konfiguration in der Schnittstelle nicht verfügbar ist, über das Netzwerk eine Anfrage zu übertragen, die den Index der nicht verfügbaren Konfiguration als Argument hat;
- über das Netzwerk von einem Konfigurationsserver den nicht verfügbaren Inhalt der Konfiguration zu empfangen;
- den derart empfangenen Inhalt der Konfiguration an den lokalen Controller zu liefern.

2. Netzwerkschnittstelle nach Anspruch 1, **dadurch gekennzeichnet, dass** die Einheit zur Verwaltung der Konfigurationen einen Assoziativspeicher umfasst, der dazu ausgelegt ist, die jeweiligen Inhalte der verfügbaren Konfigurationen sowie die Indizes dieser Konfigurationen zu speichern.

3. Netzwerkschnittstelle nach Anspruch 2, **dadurch gekennzeichnet, dass** die Einheit zur Verwaltung der Konfigurationen eine Mehrzahl von elementaren Verwaltungseinheiten (761, 762, 763) umfasst, wobei jede elementare Verwaltungseinheit dazu ausgelegt ist, die Konfiguration eines Elements oder einer Mehrzahl von Elementen (751, 752, 753) der Netzwerkschnittstelle zu verwalten, oder die Konfiguration der Verarbeitungseinheit zu verwalten.

4. Netzwerkschnittstelle nach einem der vorhergehenden Ansprüche, **dadurch gekennzeichnet, dass** der lokale Controller eine Mehrzahl von elementaren lokalen Controllern (771, 772, 773) umfasst, wobei jeder elementare lokale Controller ein Element oder eine Mehrzahl von Elementen (751, 752, 753) der Netzwerkschnittstelle kontrolliert.

5. Netzwerkschnittstelle nach Anspruch 3 oder 4, **dadurch gekennzeichnet, dass** eines der Elemente ein Eingangskommunikationscontroller (751) ist, der dazu ausgelegt ist, Übertragungsgutschriften an eine Sendequelle oder an eine Mehrzahl von Sendequellen zuzuweisen, die mit dem Netzwerk verbunden ist/sind.

6. Netzwerkschnittstelle nach Anspruch 3 oder 4, **dadurch gekennzeichnet, dass** eines der Elemente ein Ausgangskommunikationscontroller (753) ist, der dazu ausgelegt ist, an eine Zielquelle oder an eine Mehrzahl von Zielquellen Daten zu übertragen, die von der Verarbeitungseinheit ausgegeben werden, und zwar als Funktion von Übertragungsgutschriften, die ihr oder ihnen jeweils zugewiesen worden sind.

7. Netzwerkschnittstelle nach einem der vorhergehenden Ansprüche, **dadurch gekennzeichnet, dass** das Clientmodul (490, 690) der Einheit zur Verwaltung der Konfigurationen (460, 660) dazu ausgelegt ist, eine Anfrage zu übertragen, die als Argument den Index einer in der Schnittstelle nicht verfügbaren Konfiguration hat, während der zentrale Controller die Schnittstelle und/oder die Verarbeitungseinheit gemäß einer Konfiguration konfiguriert, die ihm zuvor von der Einheit zur Verwaltung übertragen worden ist.

8. Netzwerkschnittstelle nach einem der vorhergehenden Ansprüche, **dadurch gekennzeichnet, dass** jeder Konfigurationsindex umfasst:
ein Feld, das aus einer Mehrzahl von Netzwerkschnittstellen die Netzwerkschnittstelle identifiziert, auf die die Konfiguration anzuwenden ist;
ein Feld, das das Element der Schnittstelle oder die Verarbeitungseinheit identifiziert, auf die die Konfiguration anzuwenden ist;
ein Feld, das die Konfiguration aus einer Mehrzahl von möglichen Konfigurationen des Elements oder der Verarbeitungseinheit identifiziert.

9. Netzwerkschnittstelle nach Anspruch 8, **dadurch gekennzeichnet, dass** der Konfigurationsindex ferner ein Feld umfasst, das einen Gebrauchskontext der Verarbeitungseinheit identifiziert, in dem sie anzuwenden ist.

10. Einchipsystem, umfassend ein Einchip-Netzwerk (100), welches selbst wiederum gebildet ist durch Router (120), die miteinander durch physische Verbindungen (125) verbunden sind, eine Mehrzahl von Netzwerkschnittstellen (140), die jeweils einer Verarbeitungseinheit (130) zugeordnet sind, einen zentralen Controller (110, 410), der dazu ausgelegt ist, die Ausführung einer Aufgabe durch die Netzwerkschnittstellen und/oder die Verarbeitungsenheiten zu kontrollieren, **dadurch gekennzeichnet, dass**:
- jede Verarbeitungseinheit mit dem Netzwerk mittels einer Netzwerkschnittstelle (440, 640) nach einem der vorhergehenden Ansprüche verbunden ist;
- wenigstens ein Konfigurationsserver (495) mit dem Netzwerk verbunden ist, wobei der Server dazu ausgelegt ist, auf eine Anfrage einer Netzwerkschnittstelle hin, die als Argument einen Konfigurationsindex hat, eine Antwort an die Schnittstelle zu übertragen, die den Inhalt der dem Index entsprechenden Konfiguration enthält, wobei der Inhalt es der Netzwerkschnittstelle ermöglicht, wenigstens ein Element der Schnittstelle und/oder die zugeordnete Verarbeitungseinheit für die Ausführung der Ausgabe zu konfigurieren.

11. Einchipsystem nach Anspruch 10, **dadurch gekennzeichnet, dass** es eine Mehrzahl von Konfigurationsservern umfasst, wobei jeder Server in der Lage ist, auf Anfragen von Netzwerkschnittstellen zu antworten, die zu einer getrennten Untergruppe der Mehrzahl von Schnittstellen gehören.

12. Server für ein Einchipsystem nach Anspruch 10 oder 11, **dadurch gekennzeichnet, dass** er einen Speicher umfasst, der dazu ausgelegt ist, die Konfigurationsinhalte der möglichen Konfigurationen der Netzwerkschnittstellen der Mehrzahl von Schnittstellen oder der Untergruppe dieser Mehrzahl sowie die Konfigurationsinhalte der möglichen Konfigurationen der zugeordneten Verarbeitungseinheiten zu speichern, wobei der Server ferner dazu ausgelegt ist, eine von einer Netzwerkschnittstelle ausgesandte Anfrage zu analysieren, die als Argument einen Konfigurationsindex hat, ausgehend von dem Index die Identität der Sendenetzwerkschnittstelle zu bestimmen, aus dem Speicher den Konfigurationsinhalt zu extrahieren, der sich auf die durch diesen Index indizierte Konfiguration bezieht, und an die Sendenetzwerkschnittstelle den Konfigurationsinhalt zurückzusenden.

13. Server nach Anspruch 12, **dadurch gekennzeichnet, dass** er ferner einen FIFO-Puffer umfasst, um bis zu ihrer Verarbeitung die Anfragen zu speichern, die ihm von den Netzwerkschnittstellen übertragen werden, sowie Mittel zum Aussenden einer negativen Quittierung an die Netzwerkschnittstellen, deren Anfragen während einer Sättigung des Puffers nicht gespeichert werden konnten.

14. Mobiles Terminal, umfassend ein Basisbandmodem, das durch ein Einchipsystem nach Anspruch 10 oder 11 implementiert ist.

15. Basisstation, umfassend ein Basisbandmodem, das durch ein Einchipsystem nach Anspruch 10 oder 11 implementiert ist.

16. Verfahren zur Ausführung einer Aufgabe durch eine Netzwerkschnittstelle und/oder ihre zugeordnete Verarbeitungseinheit, die zu einem Einchipsystem (100) nach Anspruch 10 gehören, umfassend die folgenden Schritte:
- Übertragung (445) einer Sequenz von Indizes durch den zentralen Controller (410) an die Netzwerkschnitte (440), wobei jeder Index repräsentativ ist für eine Konfiguration der Netzwerkschnittstelle und/oder ihrer zugeordneten Verarbeitungseinheit;
- für jeden Konfigurationsinhalt, der nicht in der Schnittstelle verfügbar ist, Übertragung (491) einer Anfrage von der Schnittstelle an den Konfigurationsserver (495), die als Argument den Index der nicht verfügbaren Konfiguration hat;
- Empfang (493) jedes vom Server zurückgeschickten, nicht-verfügbaren Konfigurationsinhalts durch die Schnittstelle;
- Ausführung der durch die Indizes indizierten Konfigurationen in der Reihenfolge der Sequenz durch die Schnittstelle und/oder durch ihre zugeordnete Verarbeitungseinheit, wobei eine Konfiguration erst ausgeführt wird, nachdem ihr Inhalt in der Schnittstelle verfügbar ist und die Ausführung der vorhergehenden Konfiguration beendet worden ist.

17. Verfahren nach Anspruch 16, **dadurch gekennzeichnet, dass** eine Anfrage einer nicht-verfügbaren Konfiguration an den Konfigurationsserver übertragen wird, während eine vorhergehende Konfiguration aktuell ausgeführt wird.
